# EUROPEAN PATENT APPLICATION

(11) **EP 2 773 030 A2**
(43) Date of publication of application: **03.09.2014**
(21) Application number: 14154462.7
(22) Date of filing: 10.02.2014
(51) Int. Cl.: H02K 11/00

(54) **Inverter-integrated rotating electrical apparatus**

(30) Priority: 28.02.2013 JP 2013039095
(71) Applicant: Kabushiki Kaisha Toyota Jidoshokki, Kariya-shi, Aichi 448-8671 (JP)
(72) Inventor: Sawano, Shunsuke, Kariya-shi, Aichi 448-8671 (JP); Takada, Kazuyoshi, Kariya-shi, Aichi 448-8671 (JP); Yokoyama, Wataru, Kariya-shi, Aichi 448-8671 (JP)
(74) Representative: TBK

(57) **Abstract**

An inverter-integrated rotating electrical apparatus includes a rotating electrical machine and an inverter case. The rotating electrical machine has a housing. The housing has an end wall, which is located at an axial end of the rotating electrical machine. The inverter case accommodates inverter components fixed to the outer surface of the end wall of the housing. The inverter case includes a metal plate portion that faces the end wall of the housing. The metal plate portion forms a heat sink for cooling the inverter components. The metal plate portion has thereon cooling fins located on the outer surface of the inverter case. The metal plate portion also includes therein an accommodating recess located inside the inverter case. The accommodating recess is recessed toward the end wall of the housing and accommodates a capacitor, which is an inverter component.

## Description

### BACKGROUND OF THE INVENTION

The present invention relates to an inverter-integrated rotating electrical apparatus that includes a rotating electrical machine having a housing and an inverter case, which is fixed to the housing and accommodates inverter components.

Such an inverter-integrated rotating electrical apparatus is disclosed in Japanese Laid-Open Patent Publication No. 2004-274992. The inverter-integrated rotating electrical apparatus disclosed in the publication has an inverter case that is fixed at an axial end of a rotating electrical machine and accommodates inverter components.

The size of the inverter case is determined by the sizes of the accommodated inverter components. Thus, if an inverter component of a large size is accommodated, the size of the inverter case is increased. As a result, when fixing the inverter case at an axial end of the rotating electrical machine, the size of the inverter-integrated rotating electrical apparatus is also increased.

### SUMMARY OF THE INVENTION

Accordingly, it is an objective of the present invention to provide an inverter-integrated rotating electrical apparatus that can be reduced in size without lowering the cooling performance for inverter components.

To achieve the foregoing objective and in accordance with one aspect of the present invention, an inverter-integrated rotating electrical apparatus is provided that includes a rotating electrical machine having a housing and an inverter case. The housing has an end wall located at an axial end of the rotating electrical machine. The inverter case accommodates an inverter component fixed to an outer surface of the end wall of the housing. The inverter case includes a metal plate portion that faces the end wall of the housing. The metal plate portion functions as a heat sink for cooling the inverter component. The metal plate portion has thereon one or more cooling fins located on an outer surface of the inverter case. The metal plate portion has therein an accommodating recess located inside the inverter case. The accommodating recess is recessed toward the end wall of the housing and accommodates a capacitor, which is the inverter component.

Other aspects and advantages of the present invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a cross-sectional view illustrating an inverter-integrated rotating electrical apparatus;
Fig. 2 is a front view illustrating a bottom plate portion of an inverter case;
Fig. 3 is a front view illustrating a bottom plate portion of a comparison example; and
Fig. 4 is a front view illustrating a bottom plate portion of a modified embodiment.

### DETAILED DESCRIPTION OF THE PREFERRED EMBODIMENTS

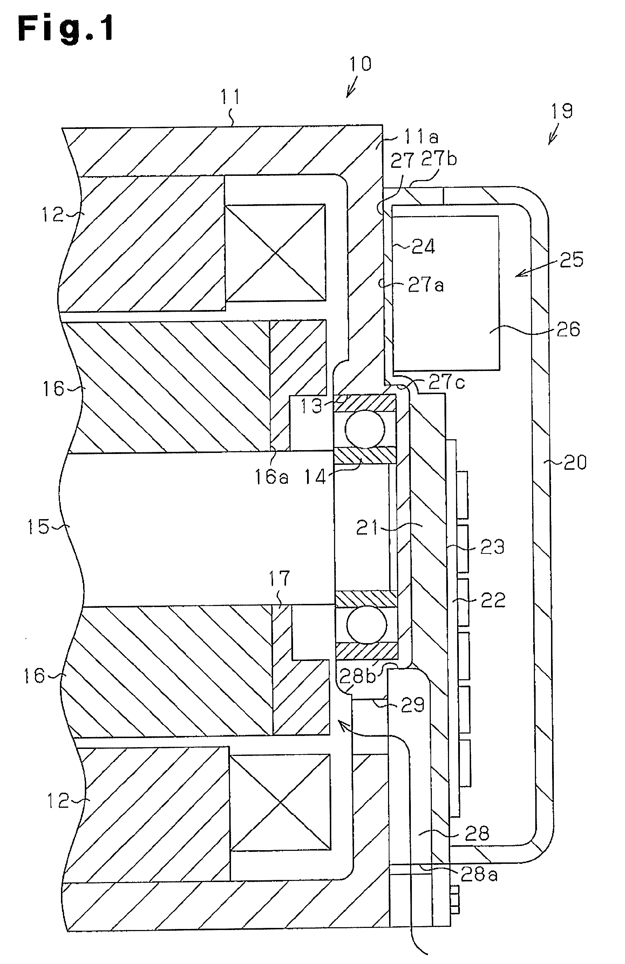

An inverter-integrated rotating electrical apparatus according to one embodiment will now be described with reference to Figs. 1 to 3.

As shown in Fig. 1, a rotating electrical machine 10 of the inverter-integrated rotating electrical apparatus includes a stator 12, a rotary shaft 15, and a rotor 16. The stator 12 is fixed to the inner circumferential surface of a housing 11. The rotary shaft 15 is rotationally supported by a shaft support portion 13 of the housing 11 via bearing 14. The rotor 16 is fixed to the outer circumferential surface of the rotary shaft 15. A fan 17 is fixed to an axial end face 16a of the rotor 16. The fan 17 rotates integrally with the rotor 16 as the rotary shaft 15 rotates.

The housing 11 has an end wall 11a, which is located at an axial end of the rotating electrical machine 10. An inverter case 19 is fixed to the outer surface (the right side as viewed in Fig. 1) of the end wall 11 a of the housing 11. The inverter case 19 accommodates various inverter components. The inverter case 19 has a metal lid plate portion 20 and a metal bottom plate portion 21. The bottom plate portion 21, which is a metal plate portion, functions as a heat sink for cooling the inverter components. The inverter case 19 is fixed to the housing 11 with the outer surface (the left side as viewed in Fig. 1) of the bottom plate portion 21 facing the end wall 11 a of the housing 11. A surface of the bottom plate portion 21 that faces inward of the inverter case 19 is defined as an inner surface of the bottom plate portion 21, and a side that faces outward of the inverter case 19 is defined as an outer surface of the bottom plate portion 21. The bottom plate portion 21 functions as a cooler for cooling the inverter components accommodated in the inverter case 19.

The bottom plate portion 21 has a first attaching portion 23 and a second attaching portion 24 on the inner surface. Inverter components that generate a relatively great amount of heat are attached to the first attaching portion 23. For example, a circuit board 22, on which electronic components such as switching elements, is attached to the first attaching portion 23. The second attaching portion 24 is continuous to the first attaching portion 23. The second attaching portion 24 is recessed toward the outside of the inverter case 19. That is, the second attaching portion 24 is recessed toward the end wall 11a of the housing 11. An accommodating recess 25 for accommodating inverter components is formed inside the inverter case 19 by the second attaching portion 24. The accommodating recess 25 is recessed toward the end wall 11a of the housing 11. The accommodating recess 25 accommodates a capacitor 26, which is an inverter component that generates a relatively small amount of heat.

The bottom plate portion 21 has a projection 27 on the outer surface. The accommodating recess 25 is located inside the projection 27. The projection 27 protrudes toward the end wall 11 a of the housing 11. Cooling fins 28 are provided on the outer surface of the bottom plate portion 21 at positions corresponding to the first attaching portion 23. In the present embodiment, the cooling fins 28 are straight fins. The cooling fins 28 increase the surface area of the bottom plate portion 21, which functions as a heat sink for cooling the inverter components accommodated in the inverter case 19. The end wall 11a of the housing 11 has an inlet 29 for introducing outside air into the housing 11. Each cooling fin 28 has an end 28a located at the outer edge of the bottom plate portion 21 and an end 28b opposite to the end 28a. The inlet 29 is located in the vicinity of the ends 28b.

The rotating electrical machine 10 of the inverter-integrated rotating electrical apparatus of the present embodiment, which has the above described configuration, and the inverter case 19, which accommodates the inverter components, are aligned along the axis of the rotary shaft 15. The cooling fins 28 are located between the rotating electrical machine 10 and the inverter case 19.

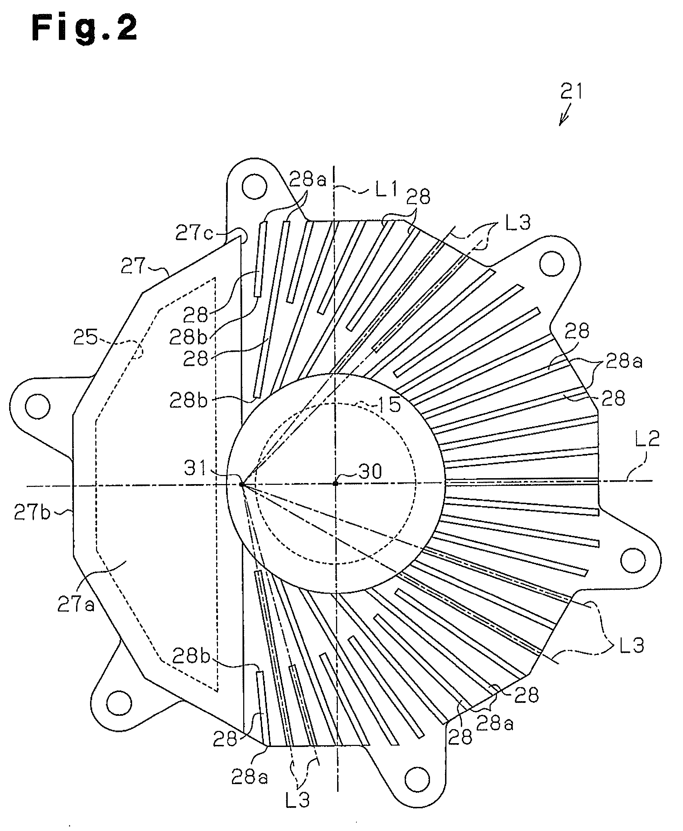

As shown in Fig. 2, the projection 27 has a flat wall 27a, an outer wall 27b, and an inner wall 27c. The flat wall 27a is located at the bottom of the accommodating recess 25. The outer wall 27b is arranged to stand along a part of the outer edge of the bottom plate portion 21. The inner wall 27c is connected to the outer wall 27b and extends in a radial direction of the rotary shaft 15 of the rotating electrical machine 10. The flat wall 27a is a wall portion that faces the end wall 11 a when the inverter case 19 is fixed to the housing 11. The area on the outer surface of the bottom plate portion 21 occupied by the projection 27 is smaller than the remaining area and is also smaller than half the area of the bottom plate portion 21.

The cooling fins 28 are located on the outer surface of the bottom plate portion 21 in a region excluding the projection 27. In the present embodiment, the cooling fins 28 extend radially from an eccentric position 31, which is separated away from a rotation axis 30 of the rotating electrical machine 10. When the bottom plate portion 21 is divided into quarters by two imaginary center lines L1, L2, which include the rotation axis 30 and are perpendicular to each other, the eccentric position 31 is located on the center line L2, which intersects with the inner wall 27c of the projection 27. In the present embodiment, the eccentric position 31 is located at the intersection between the inner wall 27c of the projection 27 and the imaginary center line L2. That is, the eccentric position 31 is located at the center of the inner wall 27c when the inner wall 27c is divided into halves along a radius of the rotary shaft 15.

Imaginary lines L3 along which the radial cooling fins 28 extend converge at the eccentric position 31. The ends 28a of the cooling fins 28, which are the farthest from the eccentric position 31, are located on the outer edge of the bottom plate portion 21. The cooling fins 28 extend without intersecting with the projection 27. The ends 28a of the cooling fins 28 thus do not contact the inner wall 27c of the projection 27.

The cooling fins 28 are arranged at predetermined intervals in the circumferential direction of the rotary shaft 15. The cooling fins 28 are also arranged with the eccentric position 31 as the center. Accordingly, the distance between any adjacent cooling fins 28 is substantially constant from the ends 28a to the ends 28b, which are the closest to the eccentric position 31. That is, the distance between any adjacent cooling fins 28 changes at a small rate.

Operation of the inverter-integrated rotating electrical apparatus will now be described.

In the present embodiment, the accommodating recess 25 is formed in a part of the bottom plate portion 21 of the inverter case 19. The accommodating recess 25 accommodates the capacitor 26, which is relatively large among the inverter components. Thus, compared to a case in which the entire inner surface of the bottom plate portion 21 is made flat to install inverter components such as the capacitor 26, the accommodating space for the inverter case 19 can be arranged closer to the housing 11. As a result, the inverter components can be accommodated without expanding the accommodating space of the inverter case 19 along the axis of the rotating electrical machine 10 and in a direction away from the housing 11.

The capacitor 26 generates a relatively small amount of heat compared to other electronic components such as switching elements. Therefore, even though the cooling fins 28 are not arranged on the flat wall 27a of the projection 27, the bottom plate portion 21 brings about a sufficient cooling performance. In contrast, the cooling fins 28 are arranged at parts where electronic components such as switching elements are arranged. Therefore, the bottom plate portion 21 and the cooling fins 28 bring about a sufficient cooling performance.

In the rotating electrical machine 10, when the fan 17 rotates as the rotor 16 rotates, negative pressure is generated in the housing 11. Accordingly, outside air is drawn into the housing 11 via the inlet 29 as indicated by the arrow of a solid line in Fig. 1. The outside air flows in through openings, or introducing portions, located between the ends 28a of the cooling fins 28 and is conducted to the inlet 29 along the cooling fins 28. At this time, heat that has been transferred to the bottom plate portion 21 and the cooling fins 28, which function as a heat sink, from the inverter components accommodated in the inverter case 19 is radiated to the outside air. As a result, the inverter components are cooled. The outside air that has been taken into the housing 11 via the inlet 29 is discharged to the outside through an outlet (not shown) of the housing 11.

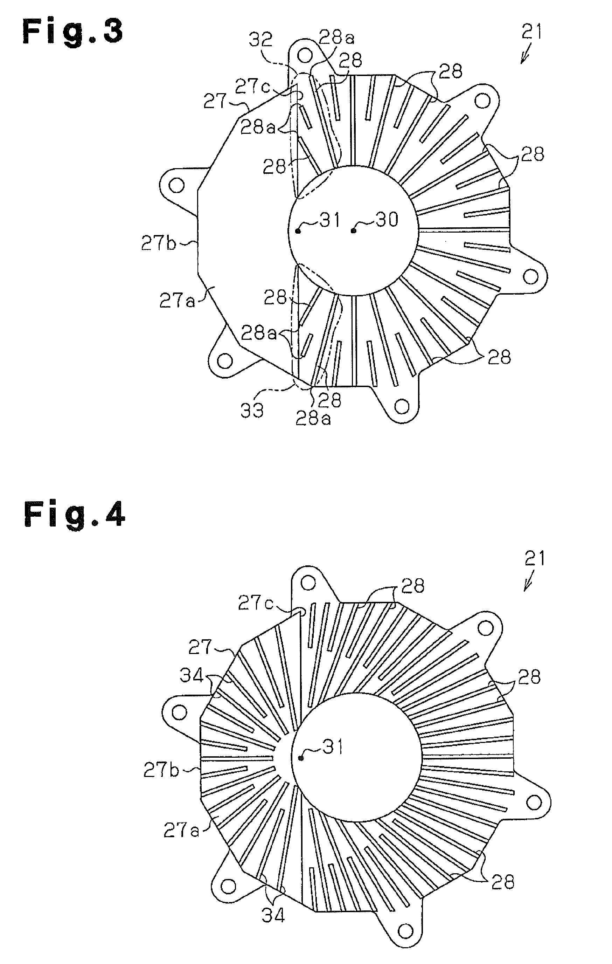

Fig. 3 illustrates a comparative structure in which cooling fins 28 are arranged on the outer surface of the bottom plate portion 21 to extend radially from the rotation axis 30 as the center. In this case, the cooling fins 28 in regions 32, 33, which are indicated by broken lines in which a long dash alternates with a pair of short dashes, extend along lines intersecting with the projection 27. Thus, the opening between the ends 28a of any adjacent cooling fins 28 are narrow or closed by the inner wall 27c of the projection 27 in the regions 32, 33. This reduces the intake amount of outside air, so that the cooling performance is lowered.

However, in the present embodiment, the cooling fins 28 extend radially from the eccentric position 31 as illustrated Fig. 2. Thus, the opening between the ends 28a of adjacent cooling fins 28 are sufficiently wide and are not closed by the inner wall 27c of the projection 27. This ensures a sufficient intake amount of outside air.

The rotating electrical machine 10 of the inverter-integrated rotating electrical apparatus of the present embodiment may be employed as an electric motor. In this case, direct-current power supplied from the outside is converted to alternate-current power using an inverter, and the alternate-current power is used to rotate the rotor 16, so that drive force is transmitted to a device coupled to the rotary shaft 15. The rotating electrical machine 10 of the inverter-integrated rotating electrical apparatus of the present embodiment may also be employed as a generator. In this case, the drive force of a device coupled to the rotary shaft 15 is used to rotate the rotor 16, so that alternate-current voltage is induced. The generated alternate-current power is changed to direct-current power by an inverter and used to charge an electric storage device such as a battery. The above described inverter-integrated rotating electrical apparatus may be mounted in a vehicle such as a hybrid vehicle.

The present embodiment thus has the following advantages.
(1) The bottom plate portion 21 has the accommodating recess 25 therein. This allows the inverter components to be accommodated without expanding the accommodating space of the inverter case 19 in a direction away from the housing 11. As a result, the inverter-integrated rotating electrical apparatus is reduced in size.
(2) The accommodating recess 25 accommodates the capacitor 26. Thus, even though the cooling fins 28 are not provided on the outer surface of the bottom plate portion 21 in a region corresponding to the accommodating recess 25, the cooling performance is not lowered. The cooling performance for the inverter components is not lowered.
(3) The cooling fins 28 extend radially from the eccentric position 31 as the center. Therefore, flow of the outside air serving as coolant between the cooling fins 28 is not hindered by the accommodating recess 25 of the bottom plate portion 21. The cooling performance for the inverter components is not lowered.
(4) The cooling fins 28 extend radially from the eccentric position 31 as the center. Therefore, parts of the cooling fins 28 for introducing outside air are neither narrowed nor blocked by the projection 27. The cooling performance for the inverter components is therefore not lowered.
(5) The cooling fins 28 are arranged to extend along lines that do not intersect with the projection 27. Therefore, flow of the outside air between the cooling fins 28 is not hindered by the projection 27. The cooling performance for the inverter components is therefore not lowered.
(6) The cooling fins 28 extend radially from the eccentric position 31 as the center. Thus, the distance between any adjacent cooling fins 28 is substantially the constant between the ends 28a and the ends 28b. Therefore, the pressure loss of outside air flowing through the cooling fins 28 is reduced, so that the cooling performance for the inverter components is not lowered.

The present embodiment may be modified as follows.

As shown in Fig. 4, cooling fins 34 may be provided on the flat wall 27a of the projection 27. In this case, the cooling fins 34 extend radially from the eccentric position 31 as in the case of the cooling fins 28 of the above illustrated embodiment. This configuration improves the cooling performance at a position corresponding to the accommodating recess 25.

The cooling fins 28, 34 may be wavy fins. When used, wavy fins extend radially from the eccentric position 31 as the center. The imaginary lines L3 also converge at the eccentric position 31. This structure increases the surface area of the bottom plate portion 21 compared to the case of straight fins, thereby improving the cooling performance.

The cooling fins on the bottom plate portion 21 may include both straight fins and wavy fins in a mixed manner. For example, wavy fins may be arranged at positions corresponding to inverter components that generate a relatively great amount of heat.

The distance between any adjacent cooling fins 28, 34 may be changed as necessary. The distance between the cooling fins may be even or uneven.

The eccentric position 31 may be changed. For example, the eccentric position 31 may be located closer or farther away from the rotation axis 30 compared to the position in the above illustrated embodiment. The eccentric position 31 may be located closer to the rotation axis 30 as long as the openings between the ends 28a of adjacent cooling fins 28 have sufficient opening area and are not blocked by the projection 27.

Therefore, the present examples and embodiments are to be considered as illustrative and not restrictive and the invention is not to be limited to the details given herein, but may be modified within the scope and equivalence of the appended claims.

An inverter-integrated rotating electrical apparatus includes a rotating electrical machine and an inverter case. The rotating electrical machine has a housing. The housing has an end wall, which is located at an axial end of the rotating electrical machine. The inverter case accommodates inverter components fixed to the outer surface of the end wall of the housing. The inverter case includes a metal plate portion that faces the end wall of the housing. The metal plate portion forms a heat sink for cooling the inverter components. The metal plate portion has thereon cooling fins located on the outer surface of the inverter case. The metal plate portion also includes therein an accommodating recess located inside the inverter case. The accommodating recess is recessed toward the end wall of the housing and accommodates a capacitor, which is an inverter component.

## Claims

1. An inverter-integrated rotating electrical apparatus comprising:
a rotating electrical machine (10) having a housing (11), wherein the housing (11) has an end wall (11a) located at an axial end of the rotating electrical machine (10); and
an inverter case (19) for accommodating an inverter component fixed to an outer surface of the end wall (11a) of the housing (11),
the inverter-integrated rotating electrical apparatus being **characterized in that**
the inverter case (19) includes a metal plate portion (21) that faces the end wall (11a) of the housing (11),
the metal plate portion (21) functions as a heat sink for cooling the inverter component,
the metal plate portion (21) has thereon one or more cooling fins (28; 34) located on an outer surface of the inverter case (19),
the metal plate portion (21) has therein an accommodating recess (25) located inside the inverter case (19), and
the accommodating recess (25) is recessed toward the end wall (11 a) of the housing (11) and accommodates a capacitor (26), which is the inverter component.

2. The inverter-integrated rotating electrical apparatus according to claim 1, wherein the cooling fins (28; 34) extend radially from an eccentric position (31) as the center, the eccentric position (31) being separated away from a rotation axis (30) of the rotating electrical machine (10).

3. The inverter-integrated rotating electrical apparatus according to claim 1 or 2, wherein
the metal plate portion (21) includes a projection (27) that is located on the outer surface of the metal plate portion (21) and protrudes toward the end wall (11 a), and
the accommodating recess (25) is located inside the projection (27).

4. The inverter-integrated rotating electrical apparatus according to claim 3, wherein the cooling fins (28; 34) extend without intersecting with the projection (27).

5. The inverter-integrated rotating electrical apparatus according to claim 3, wherein
the projection (27) has a wall portion (27a) that faces the end wall (11 a) of the housing (11), and
one or more of the cooling fins (34) are located on the wall portion.
